# DEMANDE DE BREVET EUROPEEN

(11) **EP 2 461 268 A1**
(43) Date de publication de la demande: **06.06.2012**
(21) Numéro de dépôt: 10306355.8
(22) Date de dépôt: 06.12.2010
(51) Int. Cl.: G06K 7/00

(54) **Procédé de sélection d'un dispositif électronique sans contact parmi N**

(71) Demandeur: Gemalto SA, 92190 Meudon (FR)
(72) Inventeur: Arnoux, Christophe, 04220 Corbières (FR); Meridiano, Jean-Luc, 83170 Tourves (FR)

(57) **Abrégé**

L'invention propose un procédé de sélection d'un dispositif électronique sans contact parmi plusieurs, grâce à une action volontaire de l'utilisateur selon un affichage d'informations visuelles. Ces informations visuelles étant issues de chacun des dispositifs électroniques sans contact.

L'invention propose également un terminal sans contact apte à mettre en oeuvre ce procédé.

## Description

L'invention concerne un procédé de sélection d'un dispositif électronique sans contact parmi N.

L'invention porte en particulier sur la sélection, par l'utilisateur, d'un dispositif électronique sans contact grâce à une identification visuelle de chacun d'eux.

Le nombre et la variété des dispositifs électroniques sans contact est en constante évolution. A ce jour, la grande majorité des personnes sont en possession de plusieurs de ces dispositifs.

Nous allons nous focaliser sur un certain type d'entre eux : les dispositifs sans contact passifs.

Ces dispositifs ont comme caractéristique principale de recevoir leur énergie du lecteur sans contact avec lequel ils sont en train de dialoguer. Ils contiennent tous au minimum une antenne et un composant électronique.

Parmi ces dispositifs, nous citerons par exemple les documents d'identité électroniques tels que passeports, carte d'identité, permis de conduire ..., les cartes à puces sans tels que les porte monnaies électroniques, mais également les tags.

Les tags sont des étiquettes, notamment utilisées en guise d'antivol dans certains magasins.

Tous ces dispositifs, que nous rassemblerons sous l'appellation de dispositifs sans contacts passifs (DSCP), ont en commun le cycle de fonctionnement suivant :
- Entrée du DSCP dans le champ électromagnétique d'un lecteur sans contact
- Réception d'énergie via ledit champ électromagnétique
- Démarrage du composant
- Etablissement d'une connexion entre le lecteur et le DSCP
- Lancement du ou des programmes présents sur de DSCP

Un souci se pose dans le cas ou plusieurs DSCP entrent en même temps dans le champ d'action d'un même lecteur.

De nombreuses solutions, dites « d'anticollision » permettent au lecteur de distinguer les différents DSCP. Toutefois, un problème reste entier : le choix du DSCP qui doit être utilisé, et dont le programme doit être lancé. Ce choix est d'autant plus crucial pour le porteur de tout ou partie des DSCP. En effet, si plusieurs porte-monnaie électroniques ou plusieurs cartes de crédit sans contact, entrent dans un même champ, il est important pour le porteur d'être certain de la carte ou du porte-monnaie qui va effectuer la transaction.

La présente invention résout ce problème en exigeant, lors de l'ouverture du canal de communication entre chacun des DSCP et le lecteur, une information visuelle qui sera proposée à l'utilisateur, et ce n'est qu'après sélection d'une des informations visuelles que le DSCP sélectionner pourra lancer son programme, et que la session de communication à proprement parlé avec le lecteur sera possible.

L'invention décrit, dans un premier temps, unprocédé de sélection d'un dispositif électronique sans contact parmi au moins deux, chacun comportant dans une mémoire interne au moins une information visuelle, grâce à un terminal électronique sans contact ? Ce terminal étant muni d'un moyen d'affichage et d'un moyen de saisie. Le procédé comporte au moins les étapes suivantes :
- Alimentation de tout ou partie des dispositifs électroniques sans contact au travers d'un champ électromagnétique produit par le terminal électronique,
- Initialisation de chacun des dispositifs électronique
- Etablissement, par chacun des dispositifs électroniques, d'une connexion avec le terminal électronique,
- Envoie, par chacun des dispositifs électroniques de l'information visuelle au terminal
- Affichage, par le terminal des informations visuelles reçues, sur le moyen d'affichage,
- Sélection, par l'utilisateur, d'une des informations visuelles affichées grâce au moyen de saisie.

Lors de ladite étape d'établissement, les connexions avec chacun des dispositifs électroniques peuvent se faire en parallèle les unes des autres, ou bien séquentiellement les unes après des autres.

L'invention décrit, dans un second temps, un dispositif électronique sans contact comportant au moins une mémoire, une unité de traitement, un moyen, d'affichage, un moyen de saisie. Ce dispositif possède des moyens configurés pour
- établir au moins deux connexions sans contact, avec deux dispositifs électroniques communicants distincts,
- recevoir, de chacun de ces deux dispositifs électroniques communicants au moins une information visuelle,
- afficher ladite information visuelle sur ledit moyen d'affichage,
- recevoir, au travers dudit moyen de saisie, une information dite « information de sélection »,
- envoyer un signal à au moins un desdits dispositifs électroniques.

D'autres caractéristiques et avantages de l'invention ressortiront clairement de la description qui en est faite ci-après, à titre indicatif et nullement limitatif, en référence aux dessins annexés dans lesquels :
- La figure 1 représente un système comportant deux DSCP, et un lecteur selon l'invention.
- La figure 2 représente un DSCP selon l'invention

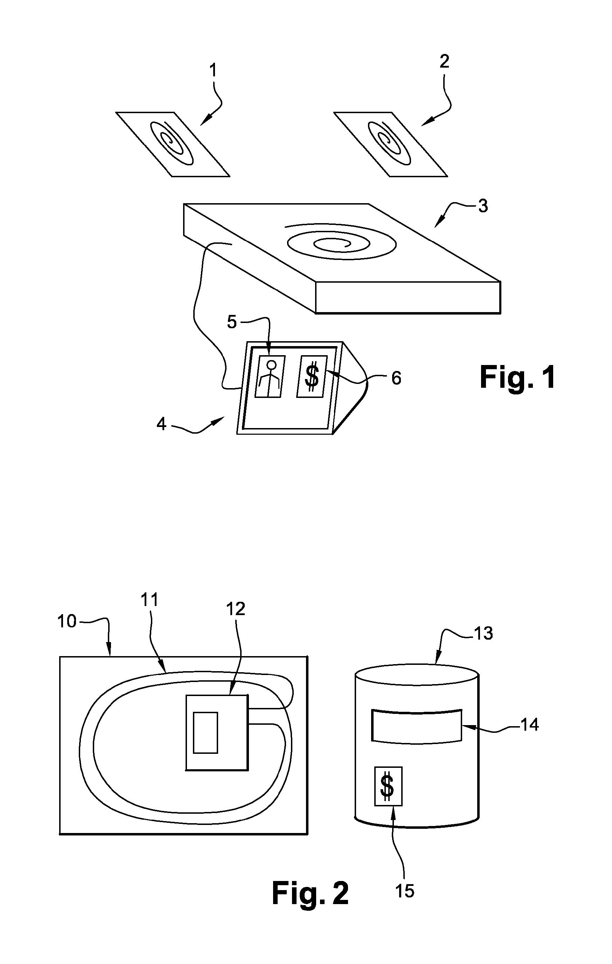

Dans la figure 1, on peut voir deux dispositifs sans contact passif (DSCP) 1 et 2. Ces deux DSCP sont représentés sous la forme de carte à puce sans contact.

Ces deux DSCP 1 et 2 sont dans le champ d'action d'un lecteur sans contact 3. Ce lecteur émet un champ électromagnétique apte à alimenter les DSCP, et possède les moyens nécessaires à établir une communication avec chacun d'eux.

Selon l'invention, chacun des DSCP, à réception dudit champs électromagnétique, démarre son composant électronique, et établie une communication avec le lecteur.

Dans un mode avantageux d'implémentation, cet établissement se fait séquentiellement. C'est-à-dire que, à réception d'une demande de communication par un des deux DSCP, le lecteur établie la communication, et ignore temporairement la deuxième requête.

Chacun des DSCP 1, 2, 10 est au moins composé d'une antenne 11 et d'un composant électronique 12.

Ce composant électronique (généralement appelé « puce ») comporte au moins une unité de calcul et une mémoire 13.

Cette mémoire 13 comporte au moins un programme 14, et une information visuelle 15 selon l'invention.

Une information visuelle selon l'invention est un élément affichable, et reconnaissable par l'utilisateur. De manière avantageuse, cette information à la forme d'un fichier « image », par exemple une photo ou un dessin.

Dans mode préféré d'implémentation de l'invention, cette information visuelle peut être gérée par l'utilisateur. Dans ce mode d'implémentation, l'utilisateur peut, selon des conditions définies, charger ou modifier cette information visuelle. Par exemple dans le cas de cartes bancaires sans contact, l'utilisateur, en présence d'un employé de la banque, et en se rendant dans une agence bancaire, peut demander a modifier cette information visuelle pour fournir une image de son choix, et la charger.

Une implémentation particulière prévoit qu'un DSCP puisse contenir plusieurs informations visuelles, et que le choix de l'information à utiliser se fasse de manière aléatoire, au moment de la transmission.

Cette mémoire peut comporter avantageusement un système d'exploitation distinct dudit programme 14.

Cette mémoire peut se répartir dans des mémoires physiques différentes, et notamment le système d'exploitation peut se trouver dans une mémoire non réinscriptible (dite ROM pour « Read Only Mémory » en anglais), alors que l'information visuelle 15 peut avantageusement être stockée dans une mémoire réinscriptible.

Une fois que le lecteur 3 a établi au moins une connexion avec un DSCP, il attend de celui-ci l'information visuelle selon l'invention.

A réception de cette information visuelle, le lecteur met le DSCP « en attente ». Cette mise en attente peut se faire par les moyens connus de l'homme de l'art, ou bien peut avantageusement se faire par le non envoie d'une information attendu par le DSCP dans le cadre du protocole standard de communication.

La même opération est ainsi faite avec l'ensemble des DSCP actifs dans le champ électromagnétique du lecteur.

Une fois que le lecteur a obtenu l'ensemble des informations visuelles 5, 6, il les affiche sur un dispositif d'affichage 4. Dans la figure 1, ce dispositif d'affichage est un écran tactile relié au lecteur 3. Dans un mode particulièrement avantageux de réalisation de l'invention, ce moyen d'affichage peut être complètement intégré au lecteur.

Une fois ces informations affichées 5, 6, le lecteur attend de l'utilisateur une sélection. Cette sélection se fait par un moyen de saisie. Dans le système de la figure 1, le dispositif d'affichage 4 étant tactile, la saisie se fait via ce même dispositif. Dans un mode plus large d'implémentation, tout moyen de saisie connu de l'homme de l'art peut être utilisé, notamment un clavier, un dispositif de pointage, etc... Cette sélection produit une donnée appelée « information de sélection ». Cette donnée est transmise depuis le moyen de saisie jusqu'à l'unité de calcul.

En fonction de l'information visuelle sélectionnée par l'utilisateur via le moyen de saisie, le lecteur sélectionne le DSCP correspondant et lui donne la possibilité de poursuivre le cours normal de son exécution, à savoir le lancement de son programme.

Les autres DSCP ne lancent pas leur programme. Cela peut se faire, soit en leur envoyant une information en ce sens (par exemple un message dédié, ou bien un message d'erreur), soit en les laissant « en attente ».

## Revendications

1. Procédé de sélection d'un dispositif électronique sans contact (1, 2, 10) parmi au moins deux, chacun comportant dans une mémoire interne (13) au moins une information visuelle (15), grâce à une terminal électronique sans contact (3), ledit terminal étant muni d'un moyen d'affichage (4) et d'un moyen de saisie (4), **caractérisé en ce qu'**il comporte au moins les étapes de :
- Alimentation de tout ou partie desdits dispositifs électroniques sans contact au travers d'un champ électromagnétique produit par ledit terminal électronique,
- Initialisation de chacun desdits dispositifs électronique,
- Etablissement, par chacun desdits dispositifs électroniques, d'une connexion avec ledit terminal électronique,
- Envoie, par chacun desdits dispositifs électroniques de ladite information visuelle audit terminal,
- Affichage, par le terminal desdites informations visuelles reçues, sur ledit moyen d'affichage,
- Sélection, par l'utilisateur, d'une des dites informations visuelles affichées grâce audit moyen de saisie.

2. Procédé selon la revendication 1, **caractérisé en ce que**, lors de ladite étape d'établissement lesdites connexions avec chacun des dits dispositifs électroniques se font en parallèle les unes des autres.

3. Procédé selon la revendication 1, **caractérisé en ce que**, lors de ladite étape d'établissement lesdites connexions avec chacun des dits dispositifs électroniques se font séquentiellement les unes après des autres.

4. Dispositif électronique sans contact comportant au moins une mémoire, une unité de traitement, un moyen, d'affichage, un moyen de saisie, **caractérisé en ce que** il possède de moyens configurés pour
- établir au moins deux connexions sans contact, avec deux dispositifs électroniques communicants distincts,
- recevoir, de chacune desdites deux dispositifs électroniques communicants au moins une information visuelle,
- afficher ladite information visuelle sur ledit moyen d'affichage,
- recevoir, au travers dudit moyen de saisie, une information dite « information de sélection »,
- envoyer un signal à au moins un desdits dispositifs électroniques.
